# FASCICULE DE BREVET EUROPEEN

(11) **EP 3 131 783 B1**
(45) Date de publication et mention de la délivrance du brevet: **25.12.2019**
(21) Numéro de dépôt: 15714876.8
(22) Date de dépôt: 18.03.2015
(51) Int. Cl.: B60N 2/68, B60N 2/36

(54) **VÉHICULE AUTOMOBILE ÉQUIPE D'UNE BANQUETTE ARRIÈRE ALLÉGÉE**
KRAFTFAHRZEUG MIT EINER LEICHTEN RÜCKSITZBANK
AUTOMOTIVE VEHICLE FITTED WITH A REAR LIGHT WEIGHT SEAT BENCH

(30) Priorité: 15.04.2014 FR 1453342
(43) Date de publication de la demande: 22.02.2017
(73) Titulaire: PSA Automobiles SA, 78300 Poissy (FR)
(72) Inventeur: BENANE, Said, F-94550 Chevilly Larue (FR)
(74) Mandataire: Fernandez, Francis Lionel
(86) Numéro de dépôt international: PCT/FR2015/050660
(87) Numéro de publication internationale: WO 2015/158974

(56) Documents cités:
- FR-A1- 2 848 929
- JP-A- H07 291 004
- JP-U- S5 898 239
- US-A1- 2012 261 929

## Description

L'invention a trait aux véhicules automobiles, et plus précisément à l'accrochage des banquettes arrière articulées sur la caisse.

Il est connu de longue date de monter la banquette arrière d'un véhicule de manière articulée pour permettre, en rabattant la banquette, d'élargir la soute à bagages et ainsi augmenter la capacité de chargement du véhicule.

Cette architecture est particulièrement répandue dans les véhicules familiaux, monospaces et SUV (acronyme de la désignation anglo-saxonne *Sport Utility Vehicle*), dont les acheteurs sont attentifs à la capacité de chargement.

Réaliser une banquette rabattable ne va cependant pas sans poser problème.

D'abord, le caractère amovible de la fixation du dossier sur la caisse rend a *priori* la banquette plus fragile en cas de choc arrière. Il a été en partie remédié à ce problème en proposant des cloisons amovibles qui limitent le risque d'intrusion des bagages dans l'habitacle en cas de choc arrière, et en munissant la caisse de larges pièces d'appui, solidaires des doublures de custodes, sur lesquelles le dossier vient s'appliquer. Cependant ces solutions alourdissent le véhicule, ce qui va à l'encontre de la tendance actuelle à l'allègement (notamment pour des raisons économiques et environnementales).

Ensuite, l'articulation nécessite de prévoir des mécanismes de fixation amovible qui puissent aisément être manœuvrés par l'utilisateur tout en offrant une certaine tenue mécanique en cas de choc par l'arrière. Cependant, les mécanismes connus sont en général relativement lourds et complexes, à l'image du mécanisme proposé par le brevet américain US 6 786 551. D'autres mécanismes sont connus par les demandes de brevet FR 2 848 929 A1 et EP 0 688 695 A1.

Un premier objectif est par conséquent de proposer un véhicule automobile équipé d'une banquette arrière rabattable qui, tout en étant allégée, offre une bonne tenue mécanique en cas de choc par l'arrière (notamment en vue de limiter le risque d'intrusion des bagages dans l'habitacle).

Un deuxième objectif est de proposer un véhicule automobile équipé d'une banquette arrière rabattable qui soit de manipulation aisée.

Un troisième objectif est de proposer véhicule automobile équipé d'une banquette arrière rabattable qui soit de fabrication et montage assez simples.

A cet effet, il est proposé un véhicule automobile comprenant :
- une caisse pourvue d'une paroi latérale et
- une banquette arrière dont un dossier est articulé par rapport à la caisse entre une position relevée et une position rabattue,
- un mécanisme de verrouillage du dossier par rapport à la paroi latérale, qui comprend un fil de gâche solidaire du dossier et un crochet solidaire de la paroi latérale, le crochet étant mobile par rapport à la paroi latérale entre une position de verrouillage dans laquelle le crochet est en prise avec le fil de gâche, et une position de déverrouillage dans laquelle le crochet est écarté du fil de gâche, le dossier comprenant une ossature tubulaire et une platine solidaire de l'ossature, le fil de gâche étant fixé sur la platine, la caisse comprenant une pièce d'appui du dossier, solidaire de la paroi latérale et sur laquelle est monté le crochet, le fil de gâche est fixé sur une face avant de la platine, et comprend un brin qui s'étend au droit d'une fenêtre pratiquée dans celle-ci en regard du crochet et au travers de laquelle celui-ci s'étend en position de verrouillage, le fil de gâche est solidaire d'une tourelle qui s'étend en saillie à partir de la face avant de la platine, et le crochet est monté articulé par rapport à la paroi latérale autour d'un axe de rotation.

Cette architecture est légère et offre une bonne résistance mécanique en cas de choc par l'arrière.

Diverses caractéristiques supplémentaires peuvent être prévues, seules ou en combinaison :
- l'axe de rotation du crochet est formé par une vis de fixation de celui-ci ;
- la pièce d'appui porte une butée élastique, cette butée présentant une face d'appui contre laquelle vient s'appliquer la platine en position relevée du dossier ;
- l'ossature présente un montant et une traverse, et la platine est fixée sur l'ossature à une jonction entre le montant et la traverse.
- la jonction entre le montant et la traverse est arrondie.

D'autres objets et avantages de l'invention apparaîtront à la lumière de la description d'un mode de réalisation, faite ci-après en référence aux dessins annexés dans lesquels :
- la figure 1 est une vue partielle, en perspective, d'un véhicule automobile, qui comprend une caisse et une banquette arrière montée articulée par rapport à la caisse entre une position relevée (en trait plein) et une position rabattue (en pointillés) ;
- la figure 2 est une vue de détail du véhicule de la figure 1, montrant le dossier de banquette dans une position voisine de la position de relevée ;
- la figure 3 est une vue à échelle agrandie d'un détail de la figure 2, selon le médaillon III ;
- la figure 4 est une vue de détail en coupe selon le plan IV-IV de la figure 1, illustrant le verrouillage et le déverrouillage du dossier ;

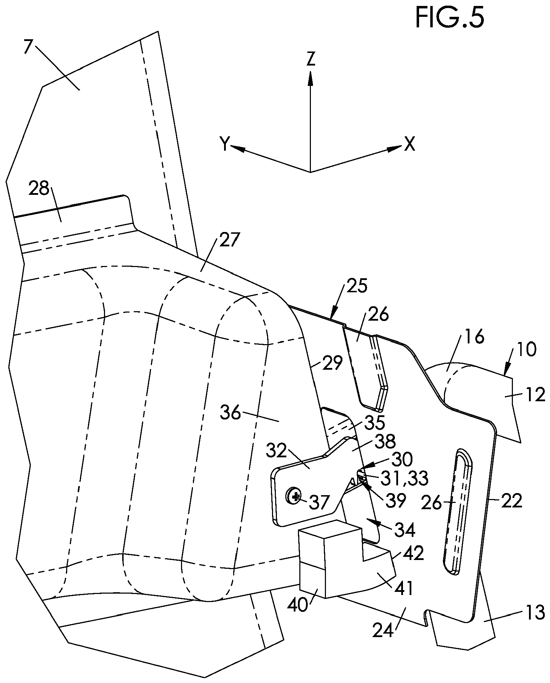

- la figure 5 est une vue de détail en perspective, par l'arrière, illustrant le verrouillage du dossier.

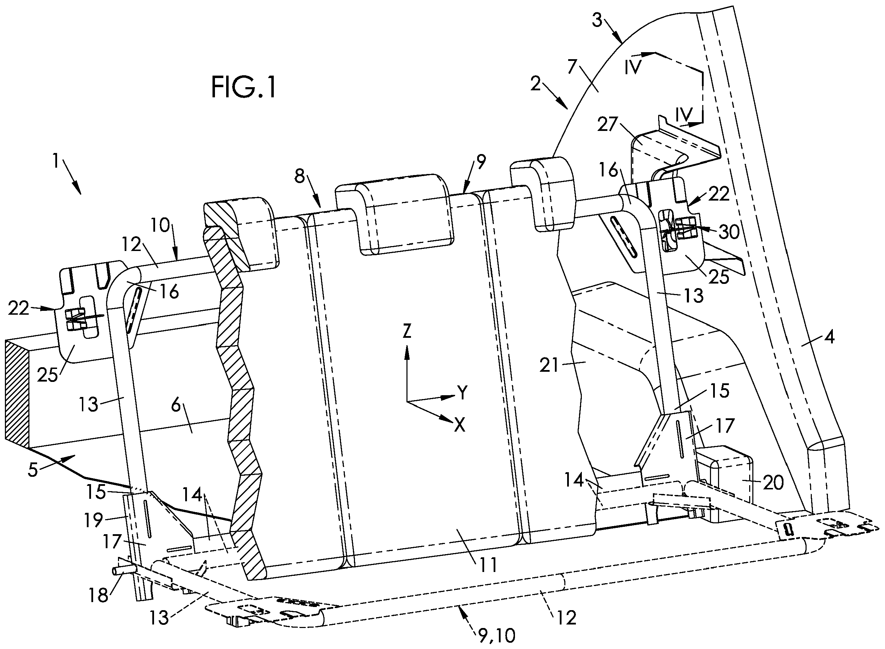

Sur la figure 1 est partiellement représenté un véhicule 1 automobile à deux rangées d'assise. Par commodité, on n'a représenté sur la figure 1 que la rangée arrière.

Le véhicule 1 comprend une caisse 2 pourvue d'une paroi 3 latérale délimitant une ouverture 4 pour une porte arrière d'accès à la rangée arrière. Comme on le voit sur la figure 1, la caisse 2 définit un coffre 5 (ou une soute) à bagages, qui comprend un plancher 6 de coffre. La paroi 3 latérale comprend une doublure 7 de custode, formée par une tôle qui peut être cintrée pour épouser les galbes de la carrosserie.

On définit par rapport au véhicule 1 un repère orthogonal XYZ comprenant trois axes perpendiculaires deux à deux, à savoir :
- un axe X, définissant une direction longitudinale, horizontale, confondue avec la direction générale de déplacement du véhicule 1,
- un axe Y, définissant une direction transversale, horizontale, qui avec l'axe X définit un plan XY horizontal,
- un axe Z, définissant une direction verticale, perpendiculaire au plan XY horizontal.

Le véhicule 1 comprend, pour former la rangée arrière d'assise, une banquette 8 arrière ayant une assise (non représentée pour des raisons de clarté) et un dossier 9 articulé par rapport à la caisse 2 entre une position relevée (en trait plein sur la figure 1) et une position rabattue (en pointillés sur la figure 1).

Comme on le voit bien sur la figure 1, le dossier 9 comprend une ossature 10 tubulaire ainsi qu'une garniture 11 fixée sur l'ossature 10. Cette structure allégée permet de réaliser des gains de poids par rapport à un dossier monobloc ordinaire intégrant un panneau de rigidification.

Selon un mode de réalisation illustré sur les figures, l'ossature 10, de préférence réalisée à partir d'un tube métallique ayant subi des opérations de reprise (pliage, perçage, usinage, soudage, etc.) comprend une traverse 12 haute et un montant latéral 13 qui s'étend à partir de chaque extrémité transversale de la traverse 12 haute.

En outre, l'ossature 10 comprend de préférence, aux fins de rigidité, une traverse 14 basse qui s'étend, parallèlement à la traverse 12 haute, entre des extrémités 15 inférieures des montants 13 latéraux.

Comme on le voit sur la figure 1, la traverse 12 haute et les montants 13 latéraux peuvent former un ensemble monobloc, la traverse 12 haute et chaque montant 13 latéral étant de préférence raccordés par une jonction 16 arrondie. L'ossature 10 est de préférence surélevée par rapport au plancher 6 de coffre.

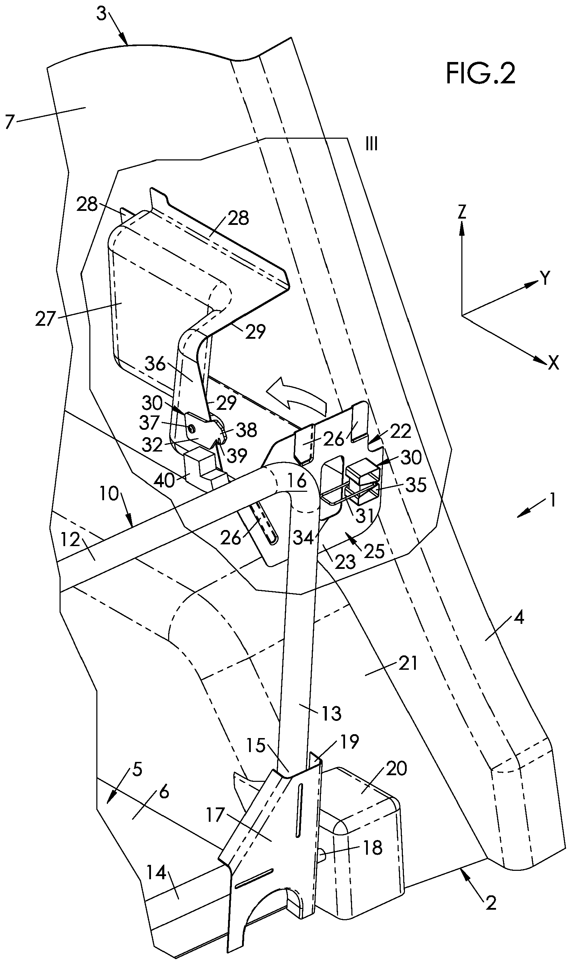

Aux extrémités 15 inférieures des montants 13 latéraux, le dossier 9 comprend une équerre 17, réalisée par exemple dans une tôle métallique, et fixée aux montants 13 latéraux (et à la traverse 14 basse), typiquement par soudage ou par tout autre moyen équivalent (vissage, rivetage, etc.). Chaque équerre 17 porte une tige 18 qui s'étend transversalement (suivant Y) en saillie à partir d'un bord 19 latéral externe de l'équerre 17 pour former un axe d'articulation du dossier 9. Comme on le voit sur la figure 2, la caisse 2 comprend un piétement 20 (solidaire par exemple d'un passage 21 de roue formé en saillie à partir de la doublure 7 de custode), muni d'un trou dans lequel est emmanchée la tige 18.

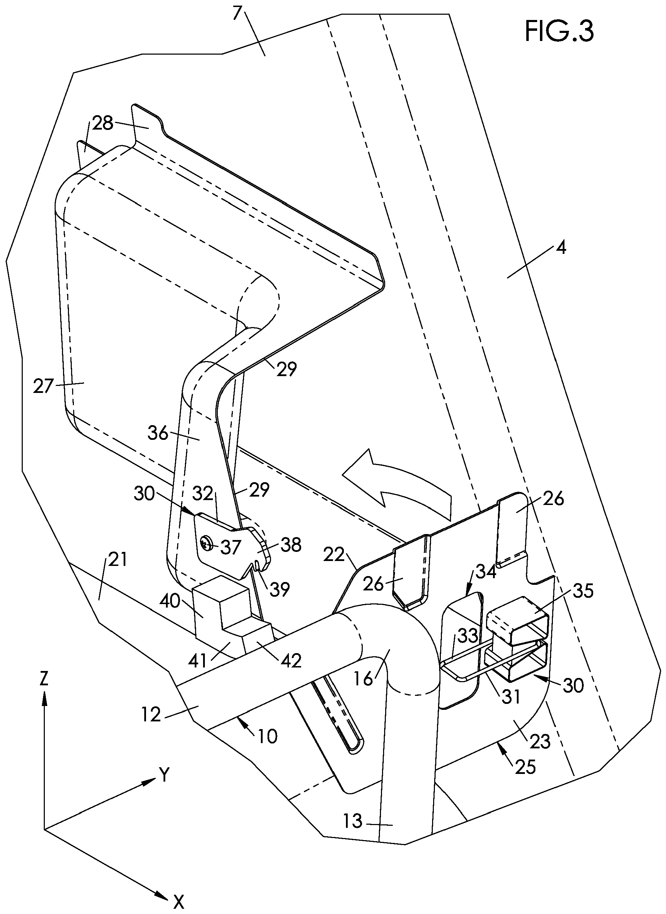

Comme on le voit par ailleurs sur la figure 1, et plus en détail encore sur les figures 2 et 3, le dossier 9 comprend, à chacun de ses bords latéraux, une platine 22 d'accrochage, solidaire de l'ossature 10.

Cette platine 22, avantageusement réalisée dans une tôle métallique (notamment en acier), est fixée sur l'ossature 10 par exemple par soudage ou par tout autre moyen équivalent (vissage, rivetage, etc.). Dans l'exemple illustré, la platine 22 est localisée au droit de la jonction 16 entre la traverse 12 haute et le montant 13 latéral, auxquels elle est conjointement fixée, au bénéfice de la rigidité de l'ensemble. La platine 22 présente une face 23 avant, par laquelle la platine 22 est fixée à l'arrière de l'ossature 10, et une face 24 arrière opposée.

Comme on le voit bien sur les figure 1 à 3, la platine 22 présente une portion 25 externe qui s'étend transversalement en saillie à partir du montant 13 latéral.

Avantageusement, la platine 22 est pourvue d'emboutis 26 de rigidification - notamment dans la portion 25 externe - qui améliorent sa tenue mécanique.

La caisse 2 comprend en outre une pièce 27 d'appui du dossier 9, solidaire de la paroi 3 latérale (et plus précisément de la doublure 7 de custode) et contre laquelle vient s'appliquer le dossier 9 en position relevée.

Comme on le voit bien sur les figures 2 et 3, la pièce 27 d'appui, de préférence réalisée dans une tôle métallique (par exemple en acier), est munie de pattes 28 de fixation en saillie, par lesquelles la pièce 27 d'appui est fixée (par exemple par soudage ou par tout autre moyen équivalent : vissage, rivetage, etc.) sur la doublure 7 de custode.

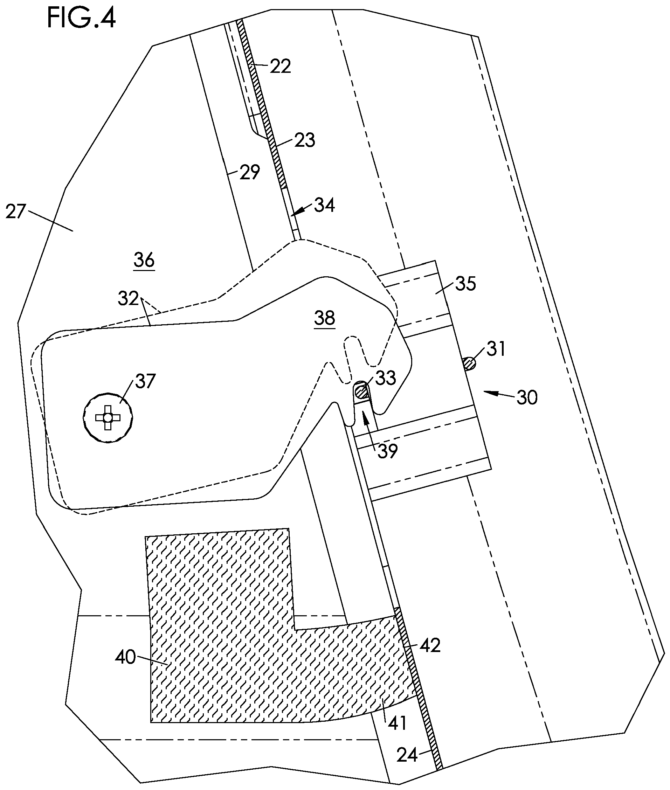

Comme on le voit également sur les figures 2 et 3, ainsi que sur la figure 4, la pièce 27 d'appui se termine, vers l'avant, par un bord 29 avant biseauté, incliné vers l'arrière par rapport à un plan transversal vertical (YZ). L'inclinaison du bord 29 avant de la pièce 27 d'appui correspond sensiblement à l'inclinaison du dossier 9 en position relevée.

Le véhicule 1 comprend en outre, de chaque côté de la caisse 2, et de part et d'autre du dossier, un mécanisme 30 de verrouillage de celui-ci par rapport à la doublure 7 de custode.

Chaque mécanisme 30 de verrouillage comprend, d'une part, un fil 31 de gâche solidaire du dossier 9 en étant fixé sur la platine 22 et, d'autre part, un crochet 32 solidaire de la doublure 7 de custode.

Le fil 31 de gâche est de préférence réalisé en acier, notamment en acier trempé pour des raisons de tenue mécanique. Dans l'exemple illustré, le fil 31 de gâche fixé sur la face 23 avant de la platine 22. Le contour du fil 31 de gâche est par exemple rectangulaire, mais il pourrait adopter une forme quelconque. Comme on le voit bien sur la figure 3, le fil 31 de gâche comprend un brin 33 arrière qui s'étend au droit d'une fenêtre 34 pratiquée dans la platine 22 (et plus précisément dans sa portion 25 externe) en regard du crochet 32.

Selon un mode de réalisation illustré sur les figures, le fil 31 de gâche est solidaire d'une tourelle 35 qui s'étend en saillie à partir de la face 23 avant de la platine 22. Cette tourelle 35, qui assure la fixation rigide du fil 31 de gâche sur la platine 22, est par exemple réalisée par assemblage de profilés métalliques soudés sur celle-ci.

En position relevée du dossier, la platine 22 vient s'appliquer contre la pièce 27 d'appui, le crochet 32 s'étendant dans un plan longitudinal vertical (selon XZ) au travers de la fenêtre 34.

Le crochet 32 est monté sur la pièce 27 d'appui en étant fixé de manière articulée sur une face latérale 36 de celle-ci. Plus précisément, le crochet 32 est monté pivotant, par rapport à la pièce 27 d'appui (et donc par rapport à la doublure 7 de custode), autour d'un axe de rotation transversal, entre une position de verrouillage (en trait plein sur la figure 4) dans laquelle le crochet 32 est en prise avec le fil 31 de gâche, et une position de déverrouillage (en pointillés sur la figure 4) dans laquelle le crochet 32 est écarté du fil 31 de gâche.

En position de verrouillage, le dossier 9 est accroché à (et donc solidaire de) la pièce 27 d'appui. Cet accrochage est amovible, la manœuvre du crochet 32 vers sa position de déverrouillage libérant le fil 31 de gâche et donc le dossier 9, et autorisant ainsi le basculement de celui-ci autour de son axe d'articulation vers sa position rabattue.

Selon un mode de réalisation illustré sur les figures, et plus particulièrement visible sur la figure 4, l'axe de rotation du crochet 32 est formé par une vis 37 de fixation de celui-ci sur la pièce 27 d'appui. Le crochet 32 est pourvu d'une tête 38 qui dépasse longitudinalement du bord 29 avant de la pièce 27 d'appui. La tête 38 est pourvue d'une fente 39 qui, en position de verrouillage, vient chevaucher le brin 33 arrière du fil 31 de gâche pour immobiliser le dossier 9. Un ressort de rappel (non représenté) sollicite en permanence le crochet 32 vers sa position de verrouillage.

Selon un mode préféré de réalisation, pour éviter le contact direct de la platine 22 sur le bord 29 avant de la pièce 27 d'appui et réduire les jeux de fonctionnement, la pièce 27 d'appui porte une butée 40 élastique solidaire de celle-ci. Cette butée 40, réalisée par exemple dans une matière plastique souple (par exemple une mousse) ou semi-rigide, est montée sur la face 36 latérale au voisinage du crochet 32, et présente une portion 41 avant qui dépasse du bord 29 avant de la pièce 27 d'appui. La portion 41 avant de la butée 40 se termine par une face 42 d'appui contre laquelle vient s'appliquer par sa face 24 arrière la platine 22, en position relevée du dossier 9.

Pour placer le dossier 9 dans sa position relevée à partir de sa position rabattue illustrée en pointillés sur la figure 1, il suffit de le faire basculer autour de son axe vers l'arrière (comme indiqué par la flèche sur les figures 2 et 3), jusqu'à ce que le fil 31 de gâche vienne s'encliqueter dans le crochet 32.

A l'inverse, pour placer le dossier 9 dans sa position rabattue à partir de sa position relevée, il faut faire pivoter (manuellement) le crochet 32 vers sa position de déverrouillage à l'encontre du ressort de rappel, puis basculer le dossier 9 vers l'avant. Une poignée (non représentée) permet, de manière accessible pour l'utilisateur, de manœuvrer le crochet 32 vers sa position de déverrouillage.

Le basculement du dossier 9 est facilité par la surélévation de l'ossature 10 par rapport au plancher 6 de coffre.

L'architecture qui vient d'être décrite offre notamment les avantages suivants.

Premièrement, bien que de structure légère, le dossier 9 offre une bonne tenue mécanique en cas de choc par l'arrière, grâce à la rigidité procurée par l'accrochage de la platine 22 sur la pièce 27 d'appui. En cas de choc par l'arrière, l'ossature 10 tubulaire, soumise à des contraintes de flexion, se déforme en pliant, sans arracher cependant le fil 31 de gâche du crochet 32. Le risque d'intrusion des bagages dans l'habitacle est ainsi limité, sans qu'il soit cependant nécessaire de monter, derrière le dossier, une cloison de protection.

Deuxièmement, le mécanisme 30 de verrouillage est de manipulation aisée, au bénéfice de la simplicité (et de la sécurité) d'utilisation.

Troisièmement, le mécanisme 30 de verrouillage, qui ne comprend qu'une pièce mobile (le crochet 32) est de fabrication et de montage assez simples.

## Revendications

1. Véhicule (1) automobile comprenant :
- une caisse (2) pourvue d'une paroi (3) latérale et
- une banquette (8) arrière dont un dossier (9) est articulé par rapport à la caisse (2) entre une position relevée et une position rabattue,
- un mécanisme (30) de verrouillage du dossier (9) par rapport à la paroi (3) latérale, qui comprend un fil (31) de gâche solidaire du dossier (9) et un crochet (32) solidaire de la paroi (3) latérale, le crochet (32) étant mobile par rapport à la paroi (3) latérale entre une position de verrouillage dans laquelle le crochet (32) est en prise avec le fil (31) de gâche, et une position de déverrouillage dans laquelle le crochet (32) est écarté du fil (31) de gâche, le dossier (9) comprenant une ossature (10) tubulaire et une platine (22) solidaire de l'ossature (10),
**caractérisé en ce que** le fil (31) de gâche est fixé sur la platine (22) et **en ce que** la caisse (2) comprend une pièce (27) d'appui du dossier (9), solidaire de la paroi (3) latérale et sur laquelle est monté le crochet (32), **en ce que** le fil (31) de gâche est fixé sur une face (23) avant de la platine (22), et comprend un brin (33) qui s'étend au droit d'une fenêtre (34) pratiquée dans celle-ci en regard du crochet (32) et au travers de laquelle celui-ci s'étend en position de verrouillage, **en ce que** le fil (31) de gâche est solidaire d'une tourelle (35) qui s'étend en saillie à partir de la face (23) avant de la platine (22), et **en ce que** le crochet (32) est monté articulé par rapport à la paroi (3) latérale autour d'un axe de rotation.

2. Véhicule (1) selon la revendication 1, **caractérisé en ce que** l'axe de rotation du crochet (32) est formé par une vis (37) de fixation de celui-ci.

3. Véhicule (1) selon la revendication 2, **caractérisé en ce que** la pièce (27) d'appui porte une butée (40) élastique, cette butée (40) présentant une face (42) d'appui contre laquelle vient s'appliquer la platine (22) en position relevée du dossier.

4. Véhicule (1) selon l'une des revendications précédentes, **caractérisé en ce que** l'ossature (10) présente un montant (13) et une traverse (12), et **en ce que** la platine (22) est fixée sur l'ossature (10) à une jonction (16) entre le montant (13) et la traverse (12).

5. Véhicule (1) selon la revendication 4, **caractérisé en ce que** la jonction (16) entre le montant (13) et la traverse (12) est arrondie.

## Patentansprüche

1. Kraftfahrzeug (1), umfassend:
- eine Karosserie (2), die mit einer Seitenwand (3) versehen ist, und
- eine Rücksitzbank (8), deren Rückenlehne (9) bezüglich der Karosserie (2) zwischen einer aufgestellten Position und einer umgeklappten Position angelenkt ist,
- einen Verriegelungsmechanismus (30) der Rückenlehne (9) bezüglich der Seitenwand (3), der einen Streichblechdraht (31) umfasst, der fest mit der Rückenlehne (9) verbunden ist, und einen Haken (32), der fest mit der Seitenwand (3) verbunden ist, wobei der Haken (32) bezüglich der Seitenwand (3) zwischen einer Verriegelungsposition, in der der Haken (32) in den Streichblechdraht (31) eingreift, und einer Entriegelungsposition, in der der Haken (32) von dem Streichblechdraht (31) beabstandet ist, beweglich ist, wobei die Rückenlehne (9) ein röhrenförmiges Gerippe (10) und eine Platte (22), die fest mit dem Gerippe (10) verbunden ist, umfasst,
**dadurch gekennzeichnet, dass** der Streichblechdraht (31) auf der Platte (22) befestigt ist, und dass die Karosserie (2) ein Auflageteil (27) der Rückenlehne (9), das fest mit der Seitenwand (3) verbunden ist und auf dem der Haken (32) montiert ist, umfasst,
dadurch, dass der Streichblechdraht (31) auf einer Vorderfläche (23) der Platte (22) befestigt ist und einen Strang (33) umfasst, der sich im rechten Winkel zu einem Fenster (34) erstreckt, das in dieser gegenüber dem Haken (32) angelegt ist, und durch das sich dieser in einer Verriegelungsposition erstreckt,
dadurch, dass der Streichblechdraht (31) fest mit einem Türmchen (35) verbunden ist, das sich ausgehend von der Vorderfläche (23) der Platte (22) vorragend erstreckt, und
dass der Haken (32) bezüglich der Seitenwand (3) um eine Rotationsachse angelenkt montiert ist.

2. Fahrzeug (1) nach Anspruch 1, **dadurch gekennzeichnet, dass** die Rotationsachse des Hakens (32) aus einer Schraube (37) zu dessen Befestigen gebildet ist.

3. Fahrzeug (1) nach Anspruch 2, **dadurch gekennzeichnet, dass** das Auflageteil (27) einen federnden Anschlag (40) trägt, wobei dieser Anschlag (40) eine Auflagefläche (42) aufweist, gegen die sich die Platte (22) in aufgestellter Position der Rückenlehne legt.

4. Fahrzeug (1) nach einem der vorstehenden Ansprüche, **dadurch gekennzeichnet, dass** das Gerippe (10) einen Ständer (13) und einen Querträger (12) aufweist, und dass die Platte (22) auf dem Gerippe (10) an einer Verbindung (16) zwischen dem Ständer (13) und dem Querträger (12) befestigt ist.

5. Fahrzeug (1) nach Anspruch 4, **dadurch gekennzeichnet, dass** die Verbindung (16) zwischen dem Ständer (13) und dem Querträger (12) gerundet ist.

## Claims

1. Automotive vehicle (1) comprising:
- a body (2) provided with a lateral wall (3) and
- a rear bench seat (8), a backrest (9) of which is articulated relative to the body (2) between a raised position and a folded position,
- a mechanism (30) for locking the backrest (9) relative to the lateral wall (3), which comprises a striker wire (31) joined to the backrest (9) and a hook (32) joined to the lateral wall (3), the hook (32) being mobile relative to the lateral wall (3) between a locking position in which the hook (32) is in touch with the striker wire (31), and an unlocking position in which the hook (32) is removed from the striker wire (31), the backrest (9) comprising a tubular framework (10) and a lockplate (22) joined to the framework (10),
**characterised in that** the striker wire (31) is fixed onto the lockplate (22) and **in that** the framework (2) comprises a support piece (27) of the backrest (9), joined to the lateral wall (3) and on which the hook (32) is mounted,
**in that** the striker wire (31) is fixed onto a front face (23) of the lockplate (22), and comprises a strand (33) which extends perpendicular to a window (34) formed in the latter with respect to the hook (32) and through which the latter extends in a locking position,
**in that** the striker wire (31) is joined to a turret (35) which extends projecting from the front face (23) of the lockplate (22), and
**in that** the hook (32) is mounted to be articulated relative to the lateral wall (3) around a rotational axis.

2. Vehicle (1) according to claim 1, **characterised in that** the rotational axis of the hook (32) is formed by a fixing screw (37) of the latter.

3. Vehicle (1) according to claim 2, **characterised in that** the support piece (27) supports a resilient stop (40), said stop (40) having a bearing face (42) against which the lockplate (22) is applied in a raised position of the backrest.

4. Vehicle (1) according to any of the preceding claims, **characterised in that** the framework (10) has a post (13) and a cross member (12), and **in that** the lockplate (22) is fixed onto the framework (10) at a junction (16) between the post (13) and the cross member (12).

5. Vehicle (1) according to claim 4, **characterised in that** the junction (16) between the post (13) and the cross member (12) is rounded.
